# EUROPÄISCHE PATENTSCHRIFT

(11) **EP 0 363 680 B1**
(45) Veröffentlichungstag und Bekanntmachung des Hinweises auf die Patenterteilung: **08.11.1995**
(21) Anmeldenummer: 89117193.6
(22) Anmeldetag: 16.09.1989
(51) Int. Cl.: H04M 11/06

(54) **Verfahren zur Übertragung von Daten**
Method for data transmission
Procédé pour la transmission de données

(30) Priorität: 11.10.1988 DE 3834515
(43) Veröffentlichungstag der Anmeldung: 18.04.1990
(73) Patentinhaber: KE KOMMUNIKATIONS-ELEKTRONIK GMBH & CO, D-30179 Hannover (DE)
(72) Erfinder: Schunk, Peter, D-3000 Hannover 1 (DE); Bock, Stefan, D-3004 Isernhagen HB (DE)

(56) Entgegenhaltungen:
- PATENT ABSTRACTS OF JAPAN vol. 12, no. 77 (E-589)(2924) 10. März 1988
- WESCON TECHNICAL PAPERS. Bd. 26, Nr. 23/2, September 1982, NORTH HOLLYWOOD US Seiten 1 - 15; S.J.DURHAM: 'INTEGRATED MODEM CONCEPTS'

## Beschreibung

Die Erfindung bezieht sich auf ein Verfahren zur Übertragung von Daten zwischen Teilnehmern des öffentlichen Fernsprechwählnetzes, bei welchen jeweils mindestens ein Fernsprechapparat, ein Datenmodem mit einer Schaltung zur Rufspannungserkennung, mit einem Tonsender und mit einem Tonempfänger sowie ein Datenendgerät an das Fernsprechwählnetz angeschlossen sind, mit welchem die Umschaltung von Fernsprechen auf Datenübertragung durch den Datenmodem entweder automatisch oder durch Betätigung einer Datentaste manuell vorgenommen wird, mit welchem mittels des Datenmodems vor Durchschaltung der Datenübertragung bei jedem Teilnehmer festgestellt wird, ob er der Rufende oder der Gerufene ist und mit welchem bei manuellem Betrieb nach Betätigung der Datentaste dadurch zwischen "Gerufen"-Zustand und "Rufend"-Zustand unterschieden wird, ob beim Einsetzen des Schleifenstroms eine Rufspannung durch den Datenmodem erkannt wurde oder nicht (JP-A-62 216 460).

Ein solches Verfahren entspricht den gültigen CCITT-Empfehlungen. Zur Benutzung im öffentlichen Fernsprechwählnetz geeignete Datenmodems sind beispielsweise in den CCITT-Empfehlungen V.21 (Duplex) und V.23 (Halbduplex) beschrieben. In der CCITT-Empfehlung V.25 ist das Aussenden eines Datenantworttons durch den gerufenen Teilnehmer vorgeschrieben. Das dient einerseits zur Aufhebung von Echosperren auf dem Übertragungsweg. Andererseits gibt der Empfang des Datenantworttons dem rufenden Teilnehmer an, daß der gerufene Teilnehmer mit einem Datenmodem ausgerüstet ist und daß daher ein Datenaustausch mit diesem Teilnehmer möglich ist. Der rufende Teilnehmer bzw. dessen Datenmodem muß auch das Ende des Datenantworttons erkennen können, da erst dann mit dem Senden von Daten begonnen werden kann. Der Datenantwortton soll nach CCITT 3,3 ± 0,7 s andauern. Er soll eine Frequenz von 2100 Hz haben.

Der jeweilige Datenmodem muß daher vor Aufnahme der Datenübertragung erkennen können, ob "sein" Teilnehmer gerufen wurde (Gerufen-Zustand) oder selbst Rufender (Ruf-Zustand) ist, damit er als Gerufener das Aussenden des Datenantworttons bewirken kann. Für den Duplexbetrieb ist die Kenntnis über Gerufen-Zustand oder Ruf-Zustand auch für die Wahl der Kanallage erforderlich, da nach CCITT die Daten des rufenden Teilnehmers grundsätzlich über Kanal 1 zum gerufenen Teilnehmer übertragen werden, während Kanal 2 zur Übertragung in der Gegenrichtung dient. Der Ablauf beim Aufbau der entsprechenden Datenverbindung bei automatischem Anruf und bei automatischer Anrufbeantwortung ist in den CCITT-Empfehlung V.25 beschrieben. Für den manuellen Betrieb sind in den CCITT-Empfehlungen keine ausführlichen Angaben gemacht. Die Teilnehmer zweier manueller Stationen sollen sich beispielsweise verabreden.

Die DE-B-1 275 093 beschreibt ein Verfahren zur automatischen Kanalwahl bei zweikanaligen Datenmodems. Diesen Datenmodems ist bei jedem Teilnehmer ein Kanalumschaltrelais zugeordnet. Als Kriterium für die Wahl des Übertragungskanals werden beim rufenden Teilnehmer nur die eigenen Wählimpulse und beim gerufenen Teilnehmer nur die ankommenden Rufzeichen verwendet. Die Umschaltung mit Kanalzuordnung wird durch ein Flip-Flop bewirkt.

Bei dem Verfahren nach der DE-C-2 502 681 wird zur Unterscheidung des Ruf-Zustandes und des Gerufen-Zustandes eine Schaltung mit unterschiedlichen Zeitgebern eingesetzt, die bewerten, ob der Datenantwortton innerhalb einer an einem der Zeitgeber einstellbaren Zeit eingetroffen ist oder nicht. Der Zeitgeber wird mit dem Anschalten des Datenmodems an die Fernsprechleitung gestartet.

Bei dem Verfahren nach der eingangs erwähnten JP-A-62 216 460 sind eine Meßeinheit und eine Entscheidungseinheit vorgesehen, mit denen der Status des Telefonhörers einerseits und das Vorhandensein eines Rufs andererseits festgestellt werden. In Abhängigkeit von den Signalen dieser Einheiten wird der Datenmodem entweder in den "Gerufen"-Zustand oder in den "Rufend"-Zustand geschaltet.

Durch die Erfindung soll das eingangs geschilderte Verfahren so weitergebildet werden, daß der Verbindungsaufbau bei Teilnehmern des öffentlichen Fernsprechwählnetzes nach den Empfehlungen des CCITT sicherer und schneller erreicht wird.

Diese Aufgabe wird gemäß der Erfindung dadurch gelöst,
- daß ein Datenmodem mit einer Schaltung zur Überbrückung der Rufpausen verwendet wird und
- daß die vom Datenmodem erkannte Sequenz, ob Rufspannung beim Einsetzen des Schleifenstroms vorhanden war oder nicht, so lange gespeichert wird, bis der Schleifenstrom unterbrochen wird bzw. bis erneut Schleifenstrom einsetzt.

Durch die Schaltung zur Rufspannungserkennung, zu der ein Zeitglied gehört, durch welches die Rufpausen überbrückt werden, wird vom Datenmodem das Anliegen einer Rufspannung erkannt, falls der eigene Teilnehmer von einem anderen Teilnehmer angerufen wird. Wenn danach Schleifenstrom fließt, weil der Hörer des Telefonapparats vom Teilnehmer abgehoben wurde, erkennt der Datenmodem aus der Reihenfolge - erst Rufspannung, dann Schleifenstrom -, daß sein Teilnehmer gerufen wird. Er veranlaßt dann nach Drücken der Datentaste die Aussendung des Datenantworttons zum Aufheben der Echosperren und schaltet bei Duplexbetrieb als gerufener Teilnehmer das Datenendgerät auf Kanal 2. Fließt hingegen ein Schleifenstrom, ohne daß vorher eine Rufspannung angelegen hat, dann erkennt der Datenmodem aus der entsprechenden Sequenz - keine Rufspannung, aber Schleifenstrom -, daß sein Teilnehmer der rufende ist. Es wird kein Datenantwortton ausgesandt.

Bei Duplexbetrieb wird das Datenendgerät nach Betätigung der Datentaste auf Kanal 1 geschaltet. Das Aussenden des Datenantworttons und gegebenenfalls die Kanalwahl sind bei diesem Verfahren also unabhängig von irgendwelchen Zeitgebern. Insbesondere das Kriterium, ob der Datenantwortton innerhalb einer bestimmten Zeit eintrifft oder nicht, ist für das Erkennen von Gerufen-Zustand oder Rufend-Zustand ohne Belang. Diese Erkenntnis ist vielmehr schon vor dem Aussenden des Datenantworttons getroffen und für sein Aussenden verantwortlich.

Die Datenmodems sind mit einem Speicher ausgerüstet, der auch mit dem vorhandenen Mikroprozessor zu einem Mikrocontroller verbunden sein kann. In dem Speicher bleibt die jeweilige Sequenz, ob Rufspannung beim Einsetzen des Schleifenstroms vorhanden war oder nicht, so lange gespeichert, bis erneut Schleifenstrom fließt. Es ist nicht erforderlich, die gespeicherte Information gezielt zu löschen. Die Datenübertragung kann beispielsweise durch das Datenendgerät durchaus unterbrochen werden, wenn beispielsweise zwei Teilnehmer mit manuellen Stationen zur gegenseitigen Information miteinander sprechen wollen. Auch die Kanallage bei Duplexbetrieb bleibt erhalten und der Datenaustausch kann nach Auflegen der Hörer der Telefonapparate ohne Verzögerung fortgesetzt werden.

Das Verfahren nach der Erfindung wird an Hand der Zeichnungen als Ausführungsbeispiel erläutert.

Es zeigen:

Fig. 1 in einem Blockschaltbild die bei einem Teilnehmer vorhandenen Einrichtungen.

Fig. 2 eine Schaltung zur Rufspannungserkennung.

Fig. 3 eine Schaltung zur Schleifenstromüberwachung.

Fig. 4 bis 6 Flußdiagramme von Funktionsabläufen bei Durchführung des Verfahrens nach der Erfindung.

Die einzelnen Stationen können für automatischen oder manuellen Betrieb ausgerüstet sein. Der Datenmodem muß in jeder Station vor Aufbau einer Datenverbindung erkennen, ob seine Station selbst ruft oder ob sie angerufen wird, damit der Datenantwortton ausgesandt und das zugehörige Datenendgerät gegebenenfalls mit dem richtigen Kanal - Kanal 1 oder 2 - verbunden wird. Damit gibt es die folgenden acht Möglichkeiten, wobei eine automatische Station mit A und eine manuelle Station mit M bezeichnet sind:
A ruft A
A ruft M
A wird von A gerufen
A wird von M gerufen
M ruft M
M ruft A
M wird von M gerufen
M wird von A gerufen.

Wie der Verbindungsaufbau bei automatischen Stationen abläuft, ist in der V.25 der CCITT-Empfehlungen beschrieben. Das vorliegende Verfahren gilt also nicht für den Datenaustausch zwischen automatischen Stationen, sondern nur, wenn mindestens eine der beiden Stationen eine manuelle Station ist.

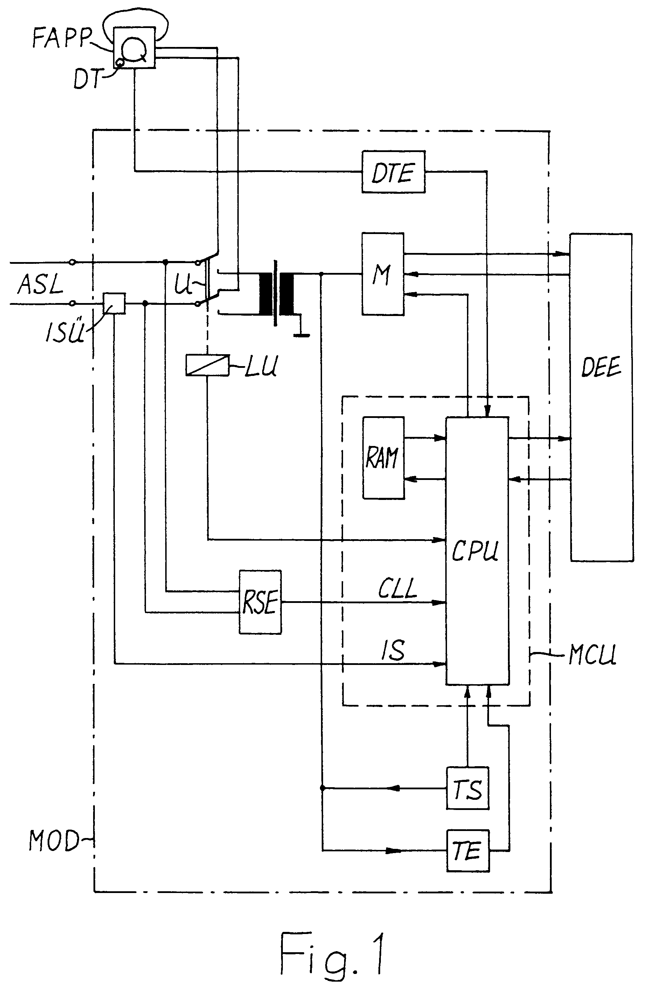

In Fig. 1 ist ein durch eine strichpunktierte Linie umrandeter Datenmodem MOD dargestellt, bei dem es sich um eine Datenübertragungseinrichtung handelt. An den MOD ist über entsprechende Leitungen ein Datenendgerät DEE angeschlossen. Außerdem ist bei dem Teilnehmer noch ein Telefonapparat FAPP mit einer Datentaste DT vorhanden, der nicht zum MOD gehört.

Herzstück des MODs ist der Mikroprozessor CPU (Central Processing Unit), der alle Abläufe steuert. An den CPU ist ein mit RAM bezeichneter Speicher angeschlossen, in dem Funktionen gespeichert werden können, wie beispielsweise Telefonnummern von bestimmten Teilnehmern des Fernsprechwählnetzes. Der RAM kann mit dem CPU und weiteren Ein- und Ausgängen des CPU zu einem MCU (Micro Controller Unit) zusammengefaßt sein. Zum MOD gehören außerdem ein Tonsender TS und ein Tonempfänger TE, die beide mit dem CPU verbunden sind.

Auch eine Schleifenstromüberwachung ISÜ zur Erkennung, ob der Schleifenstrom IS fließt, und eine Rufspannungserkennung RSE, von der ein ankommender Ruf CLL ausgeht, gehören zum MOD. ISÜ und RSE sind ebenfalls mit dem CPU verbunden. Das gilt auch für die Datentastenerkennung DTE, mit der überwacht wird, ob die DT gedrückt wird, und für den eigentlichen Modem M zur Übertragung der Daten von der DEE zur Anschlußleitung ASL des Fernsprechwählnetzes.

Die Anschaltung des MODs an die ASL erfolgt durch ein mit LU bezeichnetes Relais, das den Umschalter U betätigt. Wenn der MOD an die ASL angeschlossen ist, ist der FAPP abgetrennt. In Fig. 1 befindet sich der Umschalter U in der Position, in der der FAPP an die ASL angeschlossen ist. Der MOD ist dann also nicht mit der ASL verbunden.

Wie beschrieben, ist der MOD jeder manuellen Station mit einer RSE ausgerüstet, mittels derer eine Frequenz- und Amplitudenbewertung der Rufspannungssignale durchgeführt wird. Diese Schaltung kann als elektronische Schaltung mit Bandpaßeigenschaft bezeichnet werden. Sie weist ein Zeitglied zur Überbrückung der Pausen zwischen den Rufspannungssignalen auf. Diese Überbrückung ist erforderlich, damit beim Einsetzen vom Schleifenstrom IS in einer der Pausen, der Teilnehmer vom MOD nicht fälschlicherweise als Rufender identifiziert wird. Als Zeitglied kann beispielsweise ein nachtriggerbares Monoflop verwendet werden, das die Information etwa 6 Sekunden lang hält.

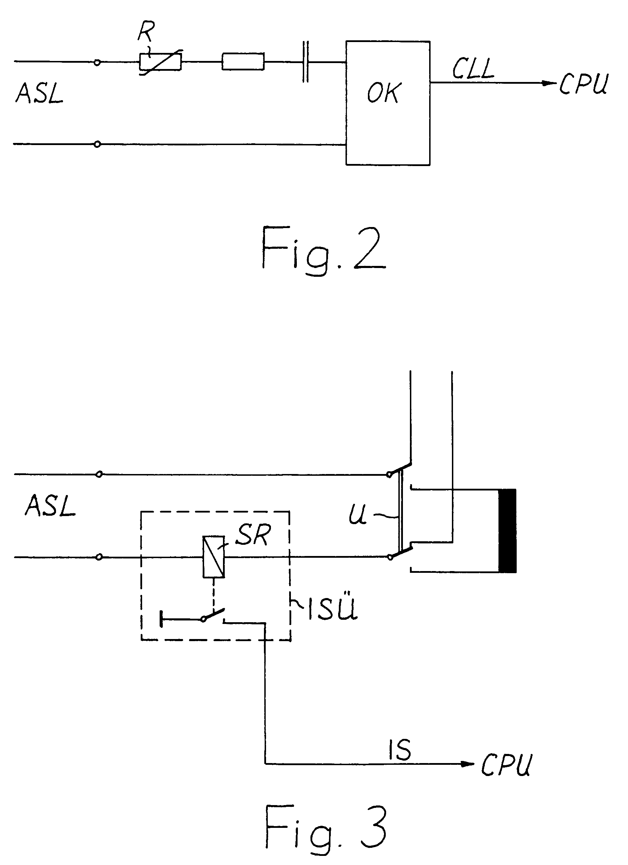

Fig. 2 zeigt in einer einfachen Ausführungsform die RSE. Die Rufspannung wird von einem anderen Teilnehmer veranlaßt über die ASL übertragen und beispielsweise durch den Widerstand R erfaßt. Zur RSE gehört ein Optokoppler OK zur galvanischen Trennung, von dem das einer vorhandenen Rufspannung entsprechende Signal CLL ausgeht und zum CPU geführt wird.

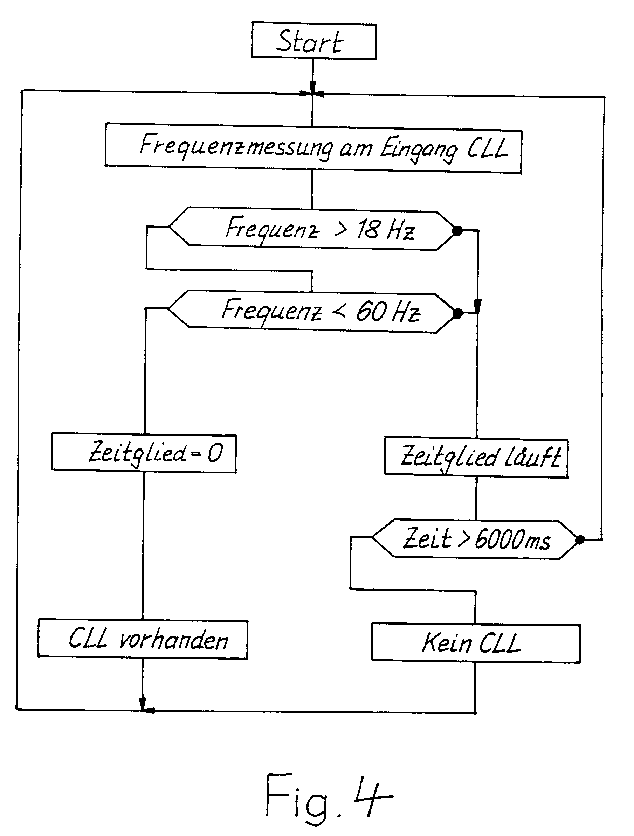

Die ISÜ nach Fig. 3 besteht in einer einfachen Ausführungsform aus einem stromempfindlichen Relais SR, das anspricht, sobald ein Schleifenstrom IS fließt. Das entsprechende Signal wird zum CPU geführt.

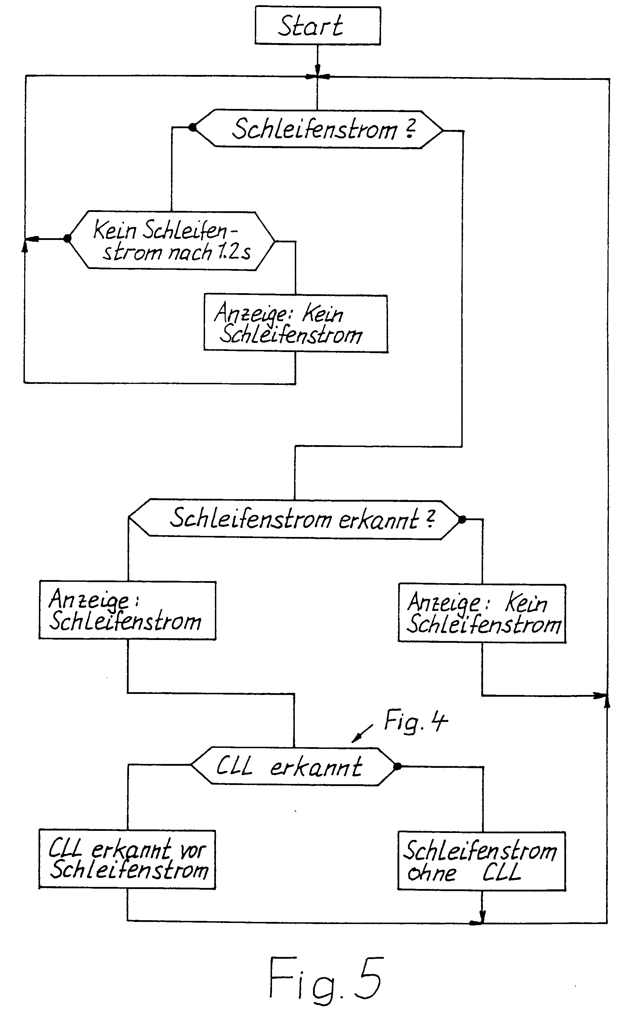

In den Flußdiagrammen der Fig. 4, 5 und 6 sind mit den rautenförmigen Kästchen jeweils sogenannte Entscheider dargestellt. Wenn bei einer Abfragung das abgefragte Signal richtig vorhanden ist, geht es mit "ja" durch einen einfachen Strich weiter, sonst mit "nein" an dem durch einen dicken Punkt gekennzeichneten Ausgang.

Fig. 4 zeigt den Ablauf bei der Rufspannungserkennung mit einer Frequenzbewertung. Dazu wird eine elektronische Schaltung mit Bandpaßeigenschaften eingesetzt. Die untere Grenze des Bandpasses liegt bei 18 Hz und die obere bei 60 Hz. Wenn ein solches Signal erkannt wird, wird das Zeitglied zurückgesetzt und das CLL-Signal ausgegeben. In den Pausen zwischen den Rufspannungssignalen wird kein Signal erkannt. Die Pausen werden aber für 6 Sekunden (6000 ms) durch das Zeitglied überbrückt. Da normalerweise nach 4 Sekunden das nächste Signal kommt, bleibt es bei dem linken Weg (ja) in Fig. 4. Erst wenn nach mehr als 6000 ms kein neues Signal kommt, wird das Signal CLL nicht weitergegeben. Es wurde dann also keine Rufspannung erkannt.

Eine ebenfalls mögliche Amplitudenbewertung bei der Rufspannungserkennung wird in der RSE direkt durchgeführt. Wenn die Amplitude eines ankommenden Rufspannungssignals zu klein ist, wird kein Signal CLL an den CPU weitergegeben.

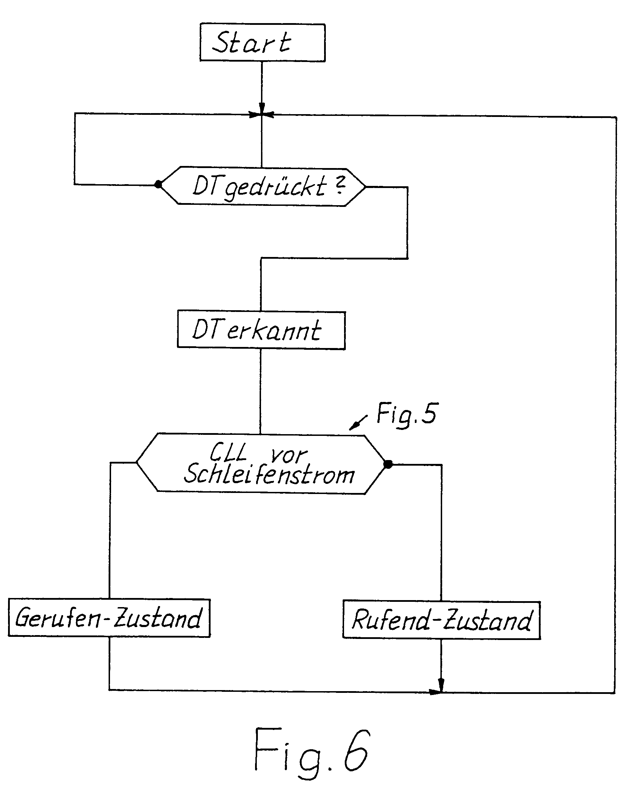

In dem für die Rufspannungserkennung erläuterten Sinne ist auch die Schleifenstromerkennung nach Fig. 5 zu verstehen. Das Endergebnis sagt hier, daß der MOD gemäß dem linken Kästchen ganz unten den "Gerufen"-Zustand erkennt, da vor dem Einsetzen des Schleifenstroms die Rufspannung (ja) erkannt wurde. Nach dem rechten Kästchen ganz unten wird hingegen der "Rufend"-Zustand erkannt, da vor dem Einsetzen des Schleifenstroms keine (nein) Rufspannung erkannt wurde.

Fig. 6 gibt den Ablauf wieder, wenn der MOD durch Betätigen der DT an die ASL angeschlossen wird. Links unten ist dann richtig, wenn der Teilnehmer gerufen wurde. Er sendet dann den Antwortton zur Aufhebung der Echosperren. Rechts unten ist dann richtig, wenn der Teilnehmer selbst Rufender ist.

Die beiden Möglichkeiten, daß die Station gerufen wird (1) oder daß die Station selbst ruft (2), werden im folgenden kurz geschildert:

### (1) Der Teilnehmer wird angerufen

Das Telefon der Station klingelt, so daß der MOD das Anliegen einer Rufspannung erkennt. Der Teilnehmer nimmt den Hörer seines FAPPs ab, wodurch der Schleifenstrom IS fließt. Die Reihenfolge (Sequenz) - Anliegen der Rufspannung und anschließender Schleifenstrom - wird vom MOD erkannt und gespeichert. Nach entsprechender Abstimmung mit der rufenden Station oder der Erkenntnis, daß eine automatische Station anruft, drückt der Teilnehmer seine DT zum Datenaustausch. Der MOD weiß, daß seine Station gerufen wurde. Er veranlaßt jetzt das Aussenden des Datenantworttons und verbindet sein DEE gegebenenfalls mit Kanal 2. Der Datenaustausch kann dann begonnen werden.

Die Speicherung der oben erläuterten Information bleibt im MOD so lange erhalten, wie die Telefonverbindung besteht. Nach einer Unterbrechung des Datenaustauschs wird, bei weiter bestehender Telefonverbindung, automatisch vom MOD immer wieder ein Datenantwortton ausgesandt, wenn der Datenaustausch wieder aufgenommen werden soll, ohne daß nochmals erkannt werden muß, ob die Station angerufen wurde oder selbst ruft. Der Teilnehmer drückt dann jeweils seine DT und aktiviert dadurch den TS. Der Datenaustausch kann beispielsweise durch das DEE unterbrochen werden, wenn die beiden Teilnehmer zweier manueller Stationen zwischendurch zur gegenseitigen Information telefonieren wollen.

### (2) Der Teilnehmer ruft selbst

Gegenüber dem unter (1) geschilderten Ablauf besteht hier nur der Unterschied, daß der Schleifenstrom IS fließt, ohne daß vorher eine Rufspannung angelegen hat. Dieser Ablauf (Sequenz) wird im MOD ebenfalls erkannt und gespeichert. Er weiß das also, wenn der Teilnehmer seine DT drückt. Das zugehörige DEE wird gegebenenfalls mit Kanal 1 verbunden. Der sonstige Ablauf des Datenaustauschs und der Erhalt der Speicherung sind gegenüber (1) unverändert.

## Patentansprüche

1. Verfahren zur Übertragung von Daten zwischen Teilnehmern des öffentlichen Fernsprechwählnetzes, bei welchen jeweils mindestens ein Fernsprechapparat (FAPP), ein Datenmodem (MOD) mit einer Schaltung zur Rufspannungserkennung (RSE), mit einem Tonsender (TS) und mit einem Tonempfänger (TE) sowie ein Datenendgerät (DEE) an das Fernsprechwählnetz angeschlossen sind, mit welchem die Umschaltung von Fernsprechen auf Datenübertragung durch den Datenmodem (MOD) entweder automatisch oder durch Betätigung einer Datentaste (DT) manuell vorgenommen wird, mit welchem mittels des Datenmodems (MOD) vor Durchschaltung der Datenübertragung bei jedem Teilnehmer festgestellt wird, ob er der Rufende oder der Gerufene ist und mit welchem bei manuellem Betrieb nach Betätigung der Datentaste (DT) dadurch zwischen "Gerufen"-Zustand und "Rufend"-Zustand unterschieden wird, ob beim Einsetzen des Schleifenstroms (IS) eine Rufspannung durch den Datenmodem (MOD) erkannt wurde oder nicht, dadurch gekennzeichnet,
- daß ein Datenmodem (MOD) mit einer Schaltung zur Überbrückung der Rufpausen verwendet wird und
- daß die vom Datenmodem (MOD) erkannte Sequenz, ob Rufspannung beim Einsetzen des Schleifenstroms (IS) vorhanden war oder nicht, so lange gespeichert wird, bis der Schleifenstrom (IS) unterbrochen wird bzw. bis erneut Schleifenstrom (IS) einsetzt.

## Claims

1. Method for data transmission between subscribers of the public switched telephone network, which subscribers have connected to the switched telephone network in each case at least one telephone set (FAPP), one data modem (MOD) with a circuit for ringing voltage detection (RSE), with a tone transmitter (TS) and a tone receiver (TE), and also one data terminal (DEE), by which method the switching-over from telephony to data transmission is performed by the data modem (MOD) either automatically or manually by actuating a data key (DT), by which method it is established by means of the data modem (MOD), before switching through the data transmission, with each subscriber whether he is the calling party or the called party and by which method distinction is made, in manual operation, after actuation of the data key (DT), between the "called" state and the "calling" state by ascertaining whether a ringing voltage has been detected or not by the data modem (MOD) when the loop current (IS) commences, characterized
- in that a data modem (MOD) with a circuit for bridging the ringing pauses is used and
- in that, whether ringing voltage was present or not when the loop current (IS) commenced, the sequence detected by the data modem (MOD) is stored until the loop current (IS) is interrupted or until loop current (IS) recommences.

## Revendications

1. Procédé pour transmettre des données entre des abonnés du réseau téléphonique public, procédé dans le cas duquel on raccorde respectivement au moins un appareil téléphonique (FAPP),un modem de données (MOD) avec un circut de reconnaissance d'une tension d'appel (RSE), avec un émetteur de tonalité (TS) et avec un récepteur de tonalité (TE) ainsi qu'un appareil terminal de données (DEE) au réseau téléphonique automatique, avec lequel la transformation de conversations téléphoniques en transmission de données par le modem de données (MOD) est opéré soit automatiquement soit par actionnement manuel , avec lequel au moyen du modem de données (MOD) on détermine avant la mise en circuit de la transmission de données chez chaque abonné, s'il est celui qui appelle ou s'il est celui qui est appelé et avec lequel, en cas de fonctionnement manuel, après l'actionnement de la touche d'échange de données (DT) on distingue de cette façon entre la situation "d'appelé" et la situation "d'appelant", selon que le modem de données (MOD) a détecté ou pas lors de l'établissement du courant de boucle (IS) une tension d'appel, procédé caractérisé en ce que :
- l'on utilise un modem de données (MOD) avec un circuit qui sert à court-circuiter les pauses d'appel et
- l'on garde en mémoire la séquence détectée par le modem (MOD) qui sert à savoir si il y a eu ou pas une tension d'appel lors de l'établissement du courant de boucle (IS), jusqu'a ce que le courant de boucle (IS) soit interrompu ou jusqu'a ce que le courant de boucle soit rétabli.
